# EUROPEAN PATENT APPLICATION

(11) **EP 1 923 551 A2**
(43) Date of publication of application: **21.05.2008**
(21) Application number: 07120238.6
(22) Date of filing: 08.11.2007
(51) Int. Cl.: F02B 29/04

(54) **Bypass assembly for a charge-air cooler including two valve members**

(30) Priority: 14.11.2006 GB 0622554
(71) Applicant: Delphi Technologies, Inc., Troy, Michigan 48007 (US)
(72) Inventor: Simion, Hugues, 57710 Aumetz (FR)
(74) Representative: Robert, Vincent

(57) **Abstract**

Bypass assembly for a charge air cooler comprising a body having a plurality of interconnected flow passageways having a first gas inlet for communication with a charge air outlet of a turbocharger, a first gas outlet for communication with an inlet of a charge air cooler, and a second gas outlet for communication with an intake manifold, a first valve member being mounted within the body between the first inlet and the first outlet, and a second valve member, mounted within the body between the first inlet and the second outlet, characterized in that an actuator is mechanically linked to both the first and second valve members for moving the first valve between its open and closed positions while simultaneously moving the second valve between its closed and open positions.

## Description

### Technical Field

The present invention relates to a bypass assembly for a charge air cooler of an internal combustion engine.

### Background of the Invention

The amount of air which can be supplied to an internal combustion engine in a vehicle depends on the pressure of the air but also on the temperature of the air. Supplying the largest possible amount of air to an internal combustion engine entails cooling compressed air in a charge air cooler downstream of the compressor of a turbocharger or supercharger before it is led to the combustion chamber of the engine. The charge air cooler is usually situated in front of the conventional radiator in a vehicle and enables heat exchange between the compressed charge air and a flow of ambient air through the cooler to cool the compressed air.

Diesel engines are frequently fitted with particulate filters in the exhaust system thereof due to the demands of emission legislation. Such filters are usually mounted in the exhaust system downstream of a catalytic device such as an oxidation catalyst and other exhaust components, such as a turbocharger.

In order to avoid blockage of the particulate filter by accumulated soot, leading to an increase in exhaust backpressure, and ultimately a breakdown of the filter, particulate filters require periodic regeneration. During regeneration the temperature of the filter is increased so that the accumulated soot is burnt off, thereby ensuring both acceptable back pressure levels and the avoidance of filter overload.

This periodic regeneration process requires the temperature of the particulate filter to be greatly elevated. The temperature of the particulate filter must be raised to around 600°C in order to burn off the soot, compared to a normal exhaust operating temperature of 150°C.

One way to increase the temperature of the particulate filter to achieve regeneration of the filter is to increase the temperature of the exhaust gases leaving the combustion chamber(s) of the engine. This can be achieved by increasing the temperature of the charge air entering the combustion chamber(s) by passing air directly from the compressor of the turbocharger or super charger to the inlet manifold, bypassing the charge air cooler. In order to achieve such selective bypass of the charge air cooler, it is known to provide valve arrangements for closing the inlet passage of the charge air cooler and opening a bypass passage between the compressor and the inlet manifold. Such known arrangements include multiple valves and multiple valve actuators, leading to increased cost and complexity.

### Summary of the Invention

According to the present invention there is provided a bypass assembly for a charge air cooler of an internal combustion engine comprising a body having a plurality of interconnected flow passageways having a first gas inlet for communication with a charge air outlet of a turbocharger, a first gas outlet for communication with an inlet of a charge air cooler, and a second gas outlet for communication with an intake manifold of the engine, a first valve member being mounted within the body between the first inlet and the first outlet for movement between an open position wherein gas can flow from the first inlet to the first outlet and a closed position wherein gas is prevented from flowing from the first inlet to the first outlet, and a second valve member, mounted within the body between the first inlet and the second outlet for movement between an open position wherein gas can flow from the first inlet to the second outlet and a closed position wherein gas is prevented from flowing from the first inlet to the second outlet, an actuator mechanically linked to both the first and second valve members for moving the first valve between its open and closed positions while simultaneously moving the second valve between its closed and open positions, said actuator being operable between a first configuration wherein said first valve member is in its open position and said second valve member is in its closed position, and a second configuration wherein said first valve member is in its closed position and said second valve member is in its open position.

Preferably the manifold further comprises a second gas inlet for communication with an outlet of the charge air cooler, said second gas inlet communicating with said second gas outlet.

Preferably said actuator is a rotary actuator, more preferably an electric motor.

Preferably said first and second valve members comprise first and second butterfly valves.

In a preferred embodiment each of the first and second valve members is pivotally mounted about a pivot axis normal to the respective passageway in which the valve member is mounted, the pivot axes of the first and second valve members being parallel to a rotational axis of the rotary actuator.

Preferably the rotary actuator is drivingly connected to the first and second valve members by means of gears.

### Brief Description of the Drawings

An embodiment of the present invention will now be described by way of example only with reference to the accompanying drawings, in which:
- Fig. 1 is a part sectional perspective view of a known bypass assembly.
- Fig. 2 is a part sectional view of a bypass assembly according to an embodiment of the present invention;
- Fig. 3 is a rear view of the bypass assembly of Fig. 2.

### Description of the preferred embodiment

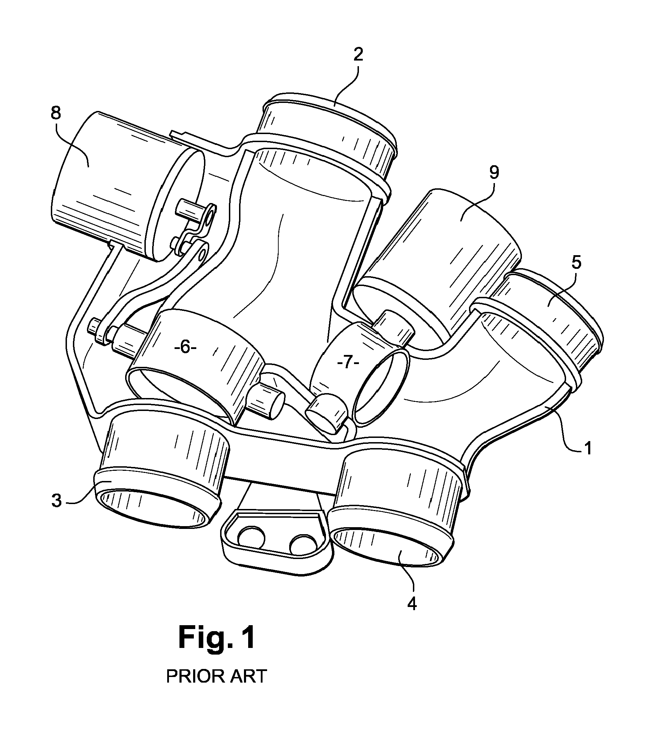

A known charge air cooler bypass assembly for a turbocharged diesel engined vehicle is illustrated in Fig.1. The assembly comprises a manifold 1 having a first gas inlet 2 for connection to an outlet passage of a turbocharger, a first gas outlet 3 for connection to a delivery pipe of the charge air cooler, a second gas inlet 4 for connection to a return pipe from the charge air cooler and a second gas outlet 5 for connection to an intake pipe of the engine. A first valve 6, typically comprising a butterfly valve, is located in the manifold between the first gas inlet 2 and the first gas outlet 3 and a second valve 7, again typically comprising a butterfly valve, is located in a bypass passage between the first gas inlet 2 and the second gas outlet 4. A first rotary actuator 8, such as an electric motor, is provided for actuating the first valve 6 and a second rotary actuator 9 is provided for actuating the second valve 7.

During normal engine operation the first valve 6 is open and the second valve 7 is closed so that charge air passes through the manifold 1 from the compressor of the turbocharger via the first gas inlet 2 and the first has outlet 3 and through the charge air cooler wherein it is cooled before passing back through the manifold 1 and into the air intake of the engine via the second gas inlet 4 and the second gas outlet 5. When it is desired to regenerate the particulate filter contained in the exhaust system of the vehicle, the first valve 6 is closed and the second valve 7 is opened so that the charge air passes directly from the turbocharger to the engine via the first gas inlet 2, the bypass passage and the second gas outlet 5, bypassing the charge air cooler, therefore increasing the temperature of the charge air and thus the temperature of the exhaust gases exiting the combustion chambers of the engine.

As can be seen from Fig. 1, the requirement for two separate valve and two separate actuators increases the size of the bypass assembly. Furthermore, the use of two separate actuators requires complex control systems to synchronise the operation of the two valves.

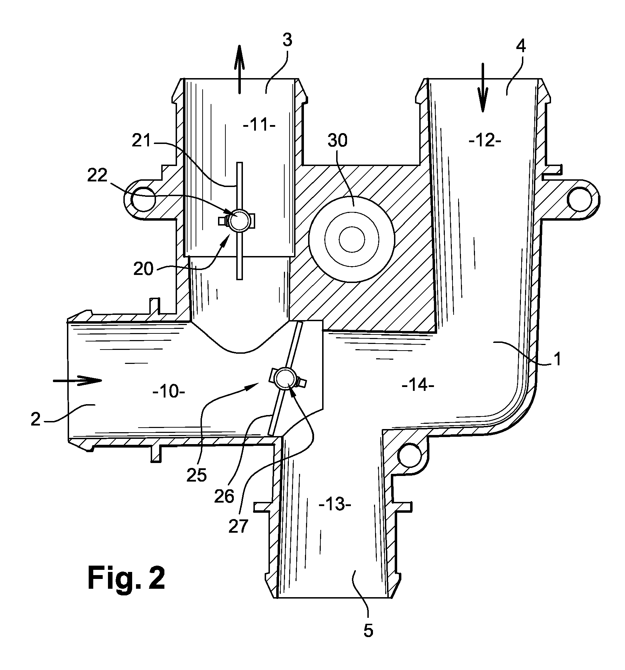

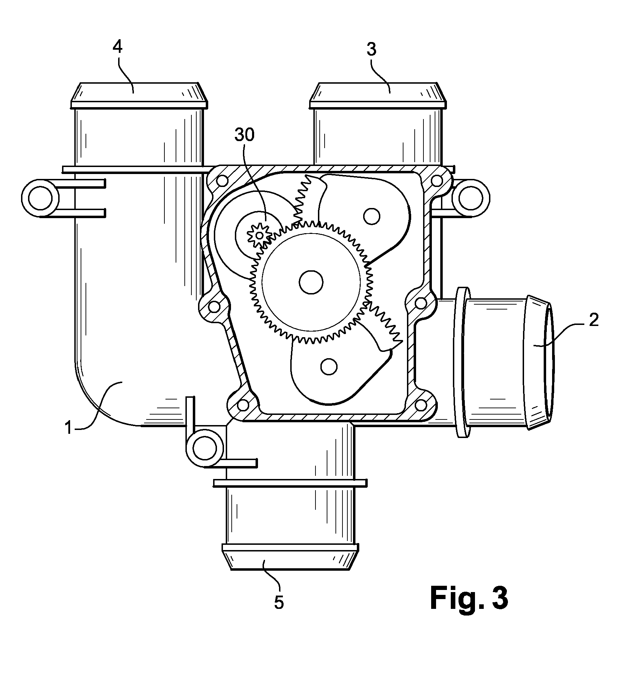

A bypass valve assembly according to an embodiment of the present invention is illustrated in Figs. 2 and 3.

The improved bypass assembly comprises a manifold 1 having a first gas inlet 2 for connection to an outlet passage of a turbocharger, a first gas outlet 3 for connection to a delivery pipe of the charge air cooler, a second gas inlet 4 for connection to a return pipe from the charge air cooler and a second gas outlet 5 for connection to an intake pipe of the engine.

The first gas inlet 2 is provided at an outer end of a first passageway 10. The first gas outlet 3 is provided at an outer end of a second passageway 11. The second gas inlet 4 is provided at an outer end of a third passageway 12 and the second gas outlet is provided at an outer end of a fourth gas passageway 13. A further passageway 14 extends between an inner end of the third passageway 12, extending substantially normally thereto, and forms an extension of the first passageway 10. The fourth passageway 13 intersects the further passageway 14 adjacent its junction with the first passageway 10. The second passageway 11 extends normally to the first passageway 10 and intersects the first passageway 10 at a location spaced inwardly from the first gas inlet 2. Each of the first, second, third, fourth and further passageways lie in a common plane.

A first butterfly valve 20 is provided in the second passageway 11 for selectively controlling the flow of gas from the first gas inlet 2, through the second passageway 11 and out of the first gas outlet 3, and hence through the charge air cooler. The first butterfly valve 20 has a first flap 21 pivotally movable about a central pivot axis 22 extending perpendicular to the axis of the second passageway 11 to be movable between an open position, wherein the flap 21 is aligned with the axis of the second passageway 11, and a closed position wherein the peripheral edges of the flap 21 engage the inner surfaces of the second passageway 11 to block the passageway.

A second butterfly valve 25 is provided at an inner end of the first gas passageway 10, downstream of the second passageway 11, for selectively controlling the flow of gas from the first gas inlet, through the first passageway 10 and into the fourth gas passageway 13 and out of the second gas outlet 5, and hence directly into the engine, bypassing the charge air cooler. The second butterfly valve 25 has a second flap 26 pivotally movable about a central pivot axis 27 extending perpendicular to the axis of the first passageway 10 to be movable between an open position, wherein the flap 26 is aligned with the axis of the first passageway 10, and a closed position wherein the peripheral edges of the flap 26 engage the inner surfaces of the first passageway 10 to block the passageway.

The first and second butterfly valves 20 and 25 are actuated by a common rotary actuator 30 located in the space between the second and third passageways and drivingly connected to the pivot axis of each valve via gearing (as shown in Fig. 3).

The two valves 20, 25 allow gas flow from the turbocharger to be directed either to the charge air cooler inlet or directly to the gas outlet leading to intake manifold of the internal combustion engine. When one path is open, the other one is closed and vice versa. One single actuator is used.

The two flap mechanisms are connected together using a gear train. A quadrant gear having external teeth is attached to the spindle of each valve mechanism. The quadrant gears engage on one single idler gear that is itself engaged with a motor pinion. As a consequence, when the motor is rotating clockwise, the idler gear is rotating counter-clockwise and the two flap mechanisms are rotating clockwise simultaneously. The two end stops are define by the flaps reaching their maximal angle in the bores.

Previous valves were using two independent actuators and two mechanisms. The novelty of this invention is to have only one single actuator transmitting motion to two mechanism simultaneously. The arrangement provides a compact assembly with a more simple operation that known dual actuator systems.

Various modifications and variations to the described embodiment of the invention will be apparent to those skilled in the art without departing from the scope of the invention as defined in the appended claims. Although the invention has been described in connection with a specific preferred embodiment, it should be understood that the invention as claimed should not be unduly limited to such specific embodiment.

## Claims

1. A bypass assembly for a charge air cooler of an internal combustion engine comprising a body (1) having a plurality of interconnected flow passageways having a first gas inlet (2) for communication with a charge air outlet of a turbocharger, a first gas outlet (3) for communication with an inlet of a charge air cooler, and a second gas outlet (5) for communication with an intake manifold of the engine, a first valve member (20) being mounted within the body (1) between the first inlet (2) and the first outlet (3) for movement between an open position wherein gas can flow from the first inlet (2) to the first outlet (3) and a closed position wherein gas is prevented from flowing from the first inlet (2) to the first outlet (3), and a second valve member (25), mounted within the body (1) between the first inlet (2) and the second outlet (5) for movement between an open position wherein gas can flow from the first inlet (2) to the second outlet (5) and a closed position wherein gas is prevented from flowing from the first inlet (2) to the second outlet (5),
**characterized in that** an actuator (30) is mechanically linked to both the first (20) and second (25) valve members for moving the first valve (20) between its open and closed positions while simultaneously moving the second valve (25) between its closed and open positions, said actuator (30) being operable between a first configuration wherein said first valve member (20) is in its open position and said second valve member (25) is in its closed position, and a second configuration wherein said first valve member (20) is in its closed position and said second valve member (25) is in its open position.

2. Bypass assembly according to claim 1, **characterized in that** the manifold (1) further comprises a second gas inlet (4) for communication with an outlet of the charge air cooler, said second gas inlet (4) communicating with said second gas outlet (5).

3. Bypass assembly according to claim 1 or 2, **characterized in that** said actuator (30) is a rotary actuator.

4. Bypass assembly according to claim 3, **characterized in that** the rotary actuator (30) is drivingly connected to the first (20) and second (25) valve members by means of gears.

5. Bypass assembly according to anyone of claims 1 to 4, **characterized in that** said actuator (30) is an electric motor.

6. Bypass assembly according to anyone of claims 1 to 5, **characterized in that** said first (20) and second (25) valve members comprise first and second butterfly valves.

7. Bypass assembly according to claim 6, **characterized in that** each of the first (20) and second (25) valve members is pivotally mounted about a pivot axis (22, 27) normal to the respective passageway in which the valve member (20, 25) is mounted, the pivot axis (22, 27) of the first (20) and second (25) valve members being parallel to a rotational axis of the rotary actuator.
